**Europäisches Patentamt**

**European Patent Office**

**Office européen des brevets**

(11) Publication number: **0 349 254 B1**

# EUROPEAN PATENT SPECIFICATION

(45) Date of publication of patent specification: **04.01.95** (51) Int. Cl.⁶: **B60T 8/48**, B60T 7/12

(21) Application number: **89306491.5**

(22) Date of filing: **27.06.89**

(54) Method for controlling the slip of drive wheels of a vehicle.

(30) Priority: **27.06.88 JP 158326/88**

(43) Date of publication of application:
**03.01.90 Bulletin 90/01**

(45) Publication of the grant of the patent:
**04.01.95 Bulletin 95/01**

(84) Designated Contracting States:
**DE FR GB IT**

(56) References cited:
**EP-A- 0 221 299**
**EP-A- 0 251 156**
**DE-A- 2 911 372**
**GB-A- 2 192 034**

(73) Proprietor: **HONDA GIKEN KOGYO KABUSHIKI KAISHA**
**1-1, 2-chome**
**Minami-Aoyama**
**Minato-ku**
**Tokyo (JP)**

(72) Inventor: **Sato, Makoto**
**K.K. Honda Gijyutsu Kenkyusho**
**4-1, 1-chome, Chuo**
**Wako-shi**
**Saitama (JP)**

(74) Representative: **Muir, Ian R. et al**
**HASELTINE LAKE & CO.**
**Hazlitt House**
**28 Southampton Buildings**
**Chancery Lane**
**London WC2A 1AT (GB)**

# Description

The present invention relates to a method for controlling the slip of drive wheels of a vehicle.

A method for controlling the drive wheel slip by braking the drive wheels when an excessive slipping state of the drive wheels is detected, by detecting the slipping state of the drive wheels from the relationship between a driven wheel speed and a drive wheel speed, is known, for example, in U.S. Patent No. 3,893,535.

However, the driven wheel speed is zero when a vehicle starts. When engine power is supplied directly to drive wheels in this state, excessive slip is immediately generated due to drive torque, on a road surface having an extremely low frictional coefficient. Therefore, it is difficult to suppress the excessive slip already generated even if the above-mentioned known braking control is employed.

EP-A-0.251.156 discloses a method of controlling the braking force applied to at least one braking circuit of a vehicle at the commencement of a starting operation of the vehicle on a hill. This arrangement applies the braking force to diagonally opposite wheels, one a driven wheel and the other a drive wheel. The arrangement is provided to inhibit roll-back of the vehicle during hill starts. A manually operated switch may be provided to initiate operation of the hill start feature. However, the braking of the driven wheel increases the resistance necessary for the drive wheel to overcome to commence movement and, in slippery conditions, this will increase the likelihood of slip of the drive wheel.

The present invention seeks to provide a method for controlling the braking of drive wheels for a vehicle which can eliminate or reduce the difficulty with the prior known traction method.

According to one aspect of the present invention, there is provided a method of suppressing excessive slip of drive wheels of a vehicle comprising the step of applying a braking force to drive wheel braking means characterised by the steps of:

to suppress excessive drive wheel slip during the starting from rest of the vehicle, applying, in response to a manual operation, a predetermined braking force to said drive wheel braking means prior to or at the commencement of a starting operation of the vehicle; and then

gradually reducing the braking force of said drive wheel braking means during the starting operation and before slip of a drive wheel is detected.

According to a second aspect of the present invention there is provided apparatus for suppressing excessive slip of drive wheels of a vehicle, comprising circuit means for applying a braking force to drive wheel braking means, characterised in that, to suppress excessive drive wheel slip during the starting from rest of the vehicle, the apparatus comprises: manually operable switch means for causing, when operated, said circuit means to apply a predetermined braking force solely to said drive wheel braking means prior to or at commencement of a starting operation of the vehicle; and means for causing a gradual reduction in the braking force applied to the drive wheel braking means during said starting operation and prior to slip of a drive wheel being detected.

With the method and apparatus described above, when a driver judges that it is likely to be difficult to start a vehicle smoothly, because of the low frictional coefficient of a road surface, the drive wheel braking means can be applied in response to the driver's manual operation to provide a predetermined drive wheel braking force. Therefore, the drive torque is suppressed at the time of starting of the vehicle, and the occurrence of excessive slip of the drive wheels may be accordingly suppressed. Further, since the braking force is gradually reduced during the starting operation, the drive torque can be gradually increased to start the vehicle smoothly.

For a better understanding of the present invention reference will now be made, by way of example, to the accompanying drawings, in which:

Figure 1 is a block diagram showing one embodiment of the invention;

Figure 2 is a graph showing the output characteristic of reference wheel speed setting means of Figure 1;

Figure 3 is a graph showing the output characteristic of slipping state judging means of Figure 1; and

Figure 4 is a timing chart for explaining the operation of the embodiment of Figure 1.

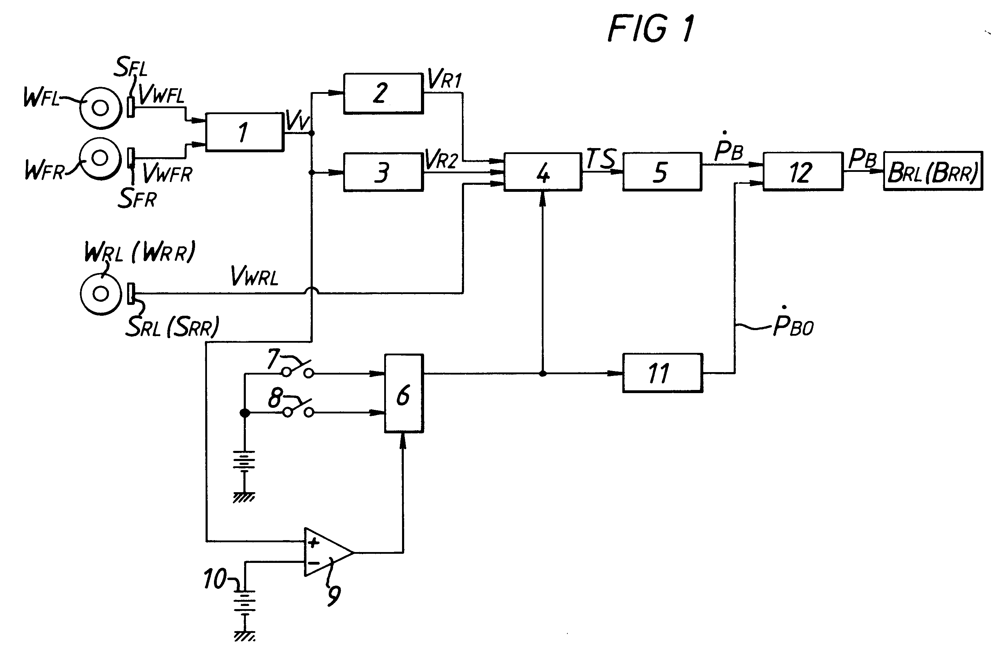

The embodiment of the present invention is shown in Figure 1 as applied to a rear-wheel drive wheel vehicle. Referring first to Figure 1, when an excessive slip occurs at the drive wheels of a rear-wheel drive vehicle, i.e., left and right rear wheels $W_{RL}$ and $W_{RR}$, braking means $B_{RL}$ and $B_{RR}$ respectively attached to the rear wheels $W_{RL}$ and $W_{RR}$ operate to brake the rear wheels $W_{RL}$ and $W_{RR}$ to avoid the excessively slipping states of the wheels $W_{RL}$ and $W_{RR}$.

The circuit arrangement for controlling the braking means $B_{RL}$ attached to the left rear wheel $W_{RL}$ is fundamentally the same as that for controlling the braking means $B_{RR}$ attached to the right rear wheel $W_{RR}$, and only the circuit arrangement for controlling the braking means $B_{RL}$ attached to the left rear wheel $W_{RL}$ will be described in detail. The right rear wheel $W_{RR}$ and the sensor and braking means $B_{RR}$ therefor are indicated in brackets without their circuit arrangement being shown.

Speed sensors $S_{FL}$ and $S_{FR}$ are respectively attached to left and right front wheels $W_{FL}$ and $W_{FR}$ as driven wheels, and driven wheel speeds $V_{WFL}$ and $V_{WFR}$ respectively produced from the speed sensors $S_{FL}$ and $S_{FR}$ are inputted to a vehicle speed detector 1. This vehicle speed detector 1 averages both the driven wheels speeds $V_{WFL}$ and $V_{WFR}$ to produce a vehicle speed $V_V$. The vehicle speed $V_V$ detected by the vehicle speed detector 1 is inputted to first reference wheel speed setting means 2 and second reference wheel speed setting means 3.

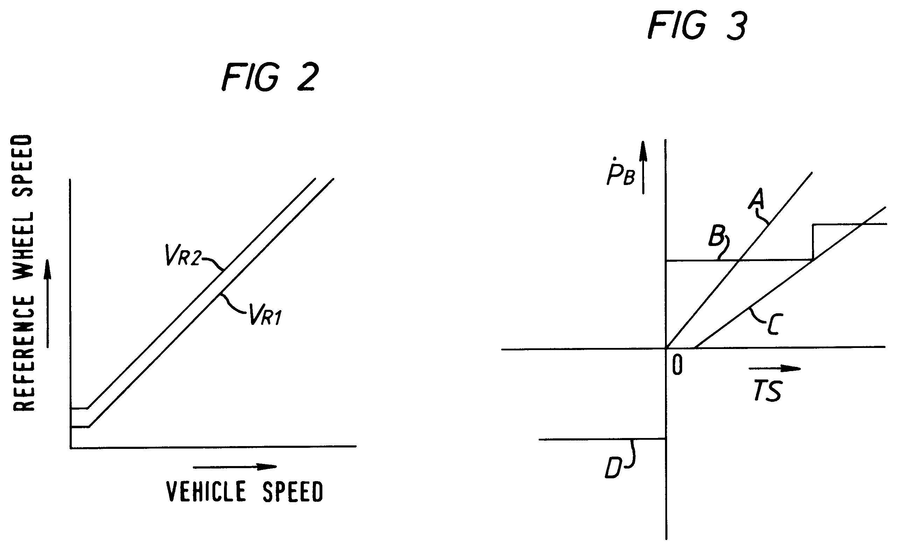

The first reference wheel speed setting means 2 and the second reference wheel speed setting means 3 are designed to produce a first reference wheel speed signal $V_{R1}$ and a second reference wheel speed signal $V_{R2}$ responsive to the vehicle speed VV in accordance with the curves shown in Figure 2, and the reference wheel speed setting means 2 and 3 respectively output reference wheel speed signals $V_{R1}$ and $V_{R2}$ responsive to the inputted vehicle speed signal $V_V$. Here, the first reference wheel speed represented by $V_{R1}$ is determined in accordance with an allowable slip ratio, and the second reference wheel speed represented by $V_{R2}$ is set to a value larger than the first reference wheel speed $V_{R1}$ and corresponds to a wheel speed when an excessive slip occurs.

The reference wheel speed signals $V_{R1}$ and $V_{R2}$ respectively outputted from the first and second reference wheel speed setting means 2 and 3 are inputted to slipping state judging means 4. On the other hand, the speed sensor $S_{RL}$ is located at to the left rear wheel $W_{RL}$, and the left drive wheel speed representative signal $V_{WRL}$ produced from the speed sensor $S_{RL}$ is also inputted to the slipping state judging means 4.

The slipping state judging means 4 produces a judged value TS of the slipping state of the rear drive wheel $W_{RL}$ from the following equation:

$$TS = (V_{WRL} - V_{R1}) / (V_{R2} - V_{R1})$$

This judged value TS is inputted to control signal generating means 5. The control signal generating means 5 outputs a control signal predetermined in response to the judged value TS, i.e. a signal corresponding to the required rate of increase $P_B$ of the braking pressure in the braking means $B_{RL}$. Here, for the situation where TS>0, the rate of increase signal $P_B$ of the braking pressure may be set arbitrarily according to one of the characteristics referenced A, B and C in Figure 3, but for the situation where TS ≦ O, i.e., when the drive wheels are not slipping, it is set to a predetermined negative value as shown by characteristic D in Figure 3.

The output of a flip-flop 6 is connected to the slipping state judging means 4 such that, when the flip-flop output is at a high level, the slipping state judging means 4 forcibly outputs a judged value TS to make the signal $P_B$ generated from the control signal generating means 5 become "0". A switch 7, manually operable by the driver of the vehicle, is connected to a set input terminal of the flip-flop 6 and the output signal of flip-flop 6 is set at high level in response to the manual closing operation of the switch 7 to feed a reference voltage to the set input. A switch 8 which is arranged to change its switching state in response to a vehicle starting operation, such as the depression of an accelerator pedal by the driver, is connected to a reset input terminal of the flip-flop 6, and the flip-flop 6 is reset in response to closure of this switch 8 which connects the reference voltage to the reset input. Further, a comparator 9 is connected to the flip-flop 6, and when the output of the comparator 9 is at high level, the setting of the flip-flop 6 is inhibited.

A signal voltage corresponding to a vehicle speed $V_V$ is inputted from the vehicle speed detector 1 to the non-inverting input terminal of the comparator 9, and a reference voltage corresponding to a reference vehicle speed $V_O$, such as 4 km/hr. is inputted from a reference power supply 10 to the inverting input terminal of the comparator 9. Thus, the comparator 9 outputs a high level when the vehicle speed $V_V$ is higher than the reference vehicle speed $V_O$. The flip-flop 6 is inhibited from being set in this state.

The output terminal of the flip-flop 6 is connected to initial braking control signal generating means 11 together with the slipping state judging means 4, and the initial braking control signal generating means 11 outputs a signal $(P_{BO})$, for setting a braking pressure $P_B$ in the braking means $B_{RL}$ corresponding to a predetermined braking pressure $P_{BO}$, as an initial braking control signal in response to high level at the output of the flip-flop 6.

The outputs of the control signal generating means 5 and the initial braking control signal generating means 11 are both inputted to a calculator 12 effectively acting like a summing integrator. The calculator 12 calculates from an input signal $P_b$, for example according to the following equation, at each output signal of a timing digital clock TDC (not shown), and outputs a control signal $P_B$ for controlling the braking means $B_{RL}$.

$$P_B = P_B + P_B$$

The $P_B$ on the right-hand side of the above equation is obtained by the previous calculation, and the new $P_B$ on the left-hand side is produced by adding the $P_B$ to the previously calculated $P_B$.

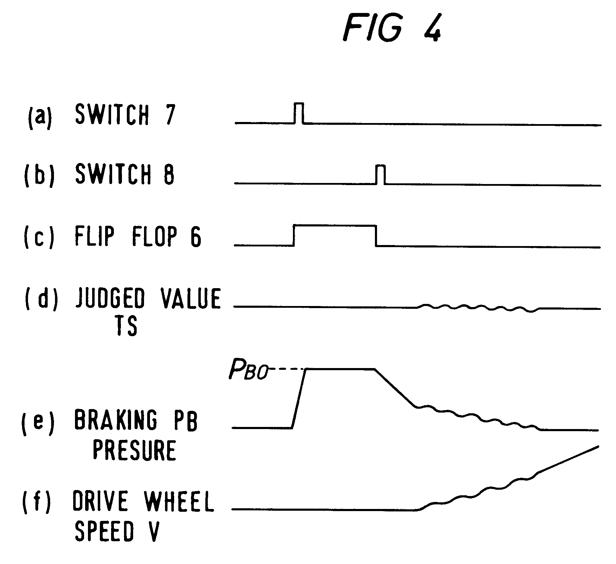

The operation of the embodiment will be described with reference to Figure 4. When the driver judges that the frictional coefficient of the road surface is extremely low and that it will be difficult to start the vehicle without wheel slip, the driver manually operates the switch 7 as shown in Figure 4(a). Then, the output of the flip-flop 6 becomes a high level as shown in Figure 4(c), and the judged value TS of the slipping state judging means 4, will be such as to produce a "O" output from 5 in response to the high level of the output of the flip-flop 6 and the output of the calculator 12 becomes $P_{BO}$ constant as shown in Figure 4(e) by the input $P_{BO}$ from the initial braking control signal generating means 11. Therefore, the braking means $B_{RL}$ applies a predetermined braking force, thereby suppressing the drive torque of the drive wheel $W_{RL}$.

When the driver attempts to start movement of the vehicle in such a state, switch 8 is closed as shown in Figure 4(b), and the flip-flop 6 is reset in response to the reset reference voltage fed through the switch 8. Thus, the output $P_B$ produced by newly adding the desired rate of increase of brake pressure signal $P_B$ from the slipping state judging means 4 to the initial braking pressure $P_{BO}$ is output from the calculator 12 as the control signal of the braking means $B_{RL}$. Since the condition TS = O exists in this stationary state, of the signal $P_B$ is negative, and the output of the calculator circuit 12 gradually reduces as shown in Figure 4-(e). Thus, the drive wheel is eventually permitted to turn as shown in Figure 4(f), thereby smoothly starting the vehicle.

If an excessive slip occurs during the starting operation, the excessive slip is controlled in accordance with the judged value TS (this is indicated by the ripple at the right-hand side -in the drawings- of Figures 4(d)-4(f).

In the embodiment described above, the starting operation of the vehicle is detected by the depression of the accelerator pedal to cause operation of switch 8. However, the present invention is not limited to such an embodiment. For example, the starting operation of the vehicle can be also detected by the connecting state or the connection starting state of a starting clutch when the gear train of a transmission is established. Alternatively the switch 8 may be operated by an increase in a vehicle speed from 0 km/hr. In this case the drive wheel speed will increase from zero whilst the braking pressure is still at $P_{BO}$, the engine driving force overcoming the braking pressure.

According to the present invention as described above, the predetermined braking force is performed by the braking means in response to the manual operation before the vehicle is started, and the braking force of the braking means is gradually reduced in response to the starting operation of the vehicle before the slip of the drive wheels is detected. Therefore, when the frictional coefficient of a road surface is extremely low and the start of the vehicle is predicted to be very difficult, a predetermined braking force is applied to the drive wheels in response to the driver's manual operation to suppress the occurrence of the excessive slip, and the braking force is gradually decreased in response to the starting operation effectively to suppress the occurrence of excessive slip, thereby permitting smooth starting of the vehicle.

## Claims

1. A method of suppressing excessive slip of drive wheels ($W_{RR}$, $W_{RL}$) of a vehicle comprising the step of applying a braking force ($P_B$) to drive wheel braking means ($B_{RL}$, $B_{RR}$) characterised by the steps of:

   to suppress excessive drive wheel slip during the starting from rest of the vehicle, applying, in response to a manual operation, a predetermined braking force ($P_{BO}$) to said drive wheel braking means ($B_{RL}$, $B_{RR}$) prior to or at the commencement of a starting operation of the vehicle; and then

   gradually reducing the braking force of said drive wheel braking means ($B_{RL}$, $B_{RR}$) during the starting operation and before slip of a drive wheel ($W_{RL}$) is detected.

2. A method according to claim 1 comprising the steps of detecting a slipping condition of a drive wheel during initial movement of the vehicle; and

   increasing the braking force ($P_B$) of the drive wheel braking means ($B_{RL}$, $B_{RR}$) in response to this slipping condition detection.

3. A method according to claim 1 or 2 wherein said starting operation is detected by detecting depression of an accelerator pedal for the vehicle and the detection is used to trigger the gradual reduction of the braking force ($P_B$) applied to said braking means ($B_{RL}$, $B_{RR}$).

4. A method according to claim 1 or 2 wherein said starting operation is detected by detecting the state of a starting clutch of a vehicle transmission gear train and using this detection to determine when to initiate said gradual reduction of the braking force ($P_B$) applied to said braking means ($B_{RC}$, $B_{RR}$).

5. Apparatus for suppressing excessive slip of drive wheels ($W_{RR}$, $W_{RL}$) of a vehicle, comprising circuit means (12) for applying a braking force ($P_B$) to drive wheel braking means ($B_{RL}$, $B_{RR}$) characterised in that, to suppress excessive drive wheel slip during the starting from rest of the vehicle, the apparatus comprises manually operable switch means (7, 6) for causing, when operated, said circuit means (12) to apply a predetermined braking force to said drive wheel braking means ($B_{RL}$, $B_{RR}$) prior to or at commencement of a starting operation of the vehicle; and means (8, 6, 4, 5) for causing a gradual reduction in the braking force applied to the drive wheel braking means ($B_{RL}$, $B_{RR}$) during said starting operation and prior to slip of a drive wheel ($W_{RL}$, $W_{RR}$) being detected.

6. Apparatus according to claim 5 comprising means (1, 2, 3, 4) for determining the occurrence of slip of a drive wheel during movement of the car, means (5) for providing an output signal at a level related to the determined slip, means (12) to provide a drive wheel braking force in dependence upon said output signal to said drive wheel braking means ($B_{RL}$) to counteract the slip, and means (6) for blocking the operation of said slip determining means and related output signal producing means during the starting from rest of the vehicle.

7. Apparatus according to claim 6 comprising means (9, 10) for preventing operation of said blocking means and the means for applying the predetermined braking force, at speeds above a predetermined speed, to enable control of slip determining means (1, 2, 3, 4) related output signal producing means (5), and dependent braking force providing means (12).

**Patentansprüche**

1. Verfahren zum Unterdrücken eines übermäßigen Schlupfs der Antriebendsräder ($W_{RR}$, $W_{RL}$) eines Fahrzeugs mit dem Schritt des Aufbringens einer Bremskraft ($P_B$) auf die Antriebsradbremseinrichtung ($B_{RL}$, $B_{RR}$), **gekennzeichnet durch** die nachfolgenden Schritte:
Aufbringen einer vorbestimmten Bremskraft ($P_{BO}$) in Reaktion auf eine manuelle Betätigung auf die Antriebsradbremseinrichtung ($B_{RR}$) vor oder bei Beginn des Anfahrvorgangs des Fahrzeugs zum Unterdrücken des übermäßigen Antriebsradschlupfes während des Anfahrens des Fahrzeugs aus dem Ruhezustand und danach allmähliches Reduzieren der Bremskraft der Antriebsradbremseinrichtung ($B_{RL}$, $B_{RR}$) während des Anfahrvorgangs und bevor ein Schlupf des Antriebsrades ($W_{RL}$) festgestellt wird.

2. Verfahren nach Anspruch 1 mit den folgenden Schritten:
Feststellen eines Schlupfzustandes eines Antriebsrades während der anfänglichen Bewegung des Fahrzeugs und Vergrößern der Bremskraft ($P_B$) der Antriebsradbremseinrichtung ($B_{RL}$, $B_{RR}$) in Reaktion auf diese Feststellung des Schlupfzustandes.

3. Verfahren nach Anspruch 1 oder 2, wobei der Anfahrvorgang durch Feststellen des Niederdrückens des Gaspedals für das Fahrzeug festgestellt wird und die Feststellung dazu verwendet wird, die allmähliche Reduzierung der Bremskraft ($P_B$) auszulösen, die auf die Bremseinrichtung ($B_{RL}$, $B_{RR}$) zur Einwirkung gebracht wird.

4. Verfahren nach Anspruch 1 oder 2, wobei der Anfahrvorgang durch Feststellen des Zustands einer Anfahrkupplung eines Getriebezugs des Fahrzeuggetriebes festgestellt wird und diese Feststellung dazu benutzt wird zu bestimmen, wann diese allmähliche Reduzierung der Bremskraft ($P_B$) zu initiieren ist, die auf die Bremseinrichtung ($B_{RL}$, $B_{RR}$) zur Einwirkung gebracht wird.

5. Vorrichtung zur Unterdrückung eines übermäßigen Schlupfs der Antriebendsräder ($W_{RR}$, $W_{RL}$) eines Fahrzeugs, mit einem Kreis (12) zur Aufbringung einer Bremskraft ($P_B$) auf die Antriebsradbremseinrichtung ($B_{RL}$, $B_{RR}$), **dadurch gekennzeichnet,** daß zur Unterdrückung des übermäßigen Antriebsradschlupfs während des Anfahrens des Fahrzeugs aus dem Ruhezustand die Vorrichtung einen manuell betätigbaren Schalter (7, 6) verfügt, um bei Betätigung den (12) zu veranlassen, eine vorbestimmte Bremskraft auf die Antriebsradbremseinrichtung ($B_{RL}$, $B_{RR}$) vor oder bei Beginn eines Anfahrvorgangs des Fahrzeugs zur Einwirkung zu bringen, und Mittel (8, 6, 4, 5) aufweist, um eine allmähliche Reduzierung der Bremskraft, die auf die Antriebsradbremseinrichtung ($B_{RL}$, $B_{RR}$) zur Einwirkung gebracht wird, während des Anfahrvorgangs und bevor der Schlupf eines Antriebendsrades ($W_{RL}$, $W_{RR}$) erfaßt wird, zu veranlassen.

6. Vorrichtung nach Anspruch 5, mit einer Einrichtung (1, 2, 3, 4) zur Bestimmung des Auftretens von Antriebsradschlupf während der Bewegung des Fahrzeugs, mit einer Einrichtung (5) zur Lieferung eines Ausgangssignals bei einem mit dem bestimmten Schlupf verbundenen Level, mit einer Einrichtung (12) zur Lieferung einer Antriebsradbremskraft in Abhängigkeit von dem Ausgangssignal an die Antriebsradbremseinrichtung ($B_{RL}$) des antreibenden Rades, um dem Schlupf entgegenzuwirken, und mit einer Einrichtung (6) zur Blockierung des Betriebs der Schlupfbestimmungseinrichtung und der Einrichtung zur Erzeugung eines hiermit verbundenen Ausgangssignals während des Anfahrens des Fahrzeugs aus dem Ruhezustand.

7. Vorrichtung nach Anspruch 6 mit einer Einrichtung (9, 10) zur Verhinderung des Betriebs der Blockierungseinrichtung und der Einrichtung für das Aufbringen der vorbestimmten Bremskraft bei Geschwindigkeiten oberhalb einer vorbestimmten Geschwindigkeit, um die Regelung der Schlupfbestimmungseinrichtung (1, 2, 3, 4) zu ermöglichen, die mit der Einrichtung (5) zur Erzeugung eines Ausgangssignals in Beziehung steht und von der Einrichtung (12) zur Schaffung einer Bremskraft abhängt.

**Revendications**

1. Méthode permettant de supprimer le patinage excessif des roues motrices ($W_{RR}$, $W_{RL}$) d'un véhicule, comprenant l'étape d'application d'une force de freinage ($P_B$) à des dispositifs de freinage des roues motrices ($B_{RL}$, $B_{RR}$), caractérisée par les étapes suivantes :

suppression du patinage excessif des roues motrices au démarrage à partir de la condition d'arrêt du véhicule, en appliquant, en réponse à un actionnement manuel, une force de freinage ($P_{B0}$) prédéterminée auxdits dispositifs de freinage des roues motrices ($B_{RL}$, $B_{RR}$) avant ou au début de l'opération de démarrage du véhicule ; puis

réduction progressive de la force de freinage desdits dispositifs de freinage des roues motrices ($B_{RL}$, $B_{RR}$) pendant l'opération de démarrage et avant détection du patinage d'une roue motrice ($W_{RL}$).

2. Méthode selon la revendication 1, comprenant les étapes de détection d'une condition de patinage d'une roue motrice lors du mouvement initial du véhicule ; et

d'augmentation de la force de freinage ($P_B$) des dispositifs de freinage des roues motrices ($B_{RL}$, $B_{RR}$) en réponse à cette détection de condition de patinage.

3. Méthode selon la revendication 1 ou 2 caractérisée en ce que ladite opération de démarrage est décelée par détection de l'actionnement d'une pédale d'accélérateur du véhicule et en ce que la détection est utilisée pour déclencher la réduction progressive de la force de freinage ($P_B$) appliquée auxdits dispositifs de freinage ($B_{RL}$, $B_{RR}$).

4. Méthode selon la revendication 1 ou 2, caractérisée en ce que l'opération de démarrage est décelée en détectant l'état d'un embrayage de démarrage d'une transmission de véhicule et en utilisant cette détection pour déterminer quand déclencher ladite réduction progressive de la force de freinage ($P_B$) appliquée auxdits dispositifs de freinage ($B_{RL}$, $B_{RR}$).

5. Appareil permettant de supprimer le patinage excessif des roues motrices ($W_{RR}$, $W_{RL}$) d'un véhicule, comprenant un dispositif de circuit (12) pour appliquer une force de freinage ($P_B$) à des dispositifs de freinage des roues motrices ($B_{RL}$, $B_{RR}$), caractérisé en ce que, pour supprimer le patinage excessif des roues motrices pendant le démarrage à partir de la condition d'arrêt, l'appareil comprend des dispositifs interrupteurs (6, 7) susceptibles d'être actionnés manuellement, qui, lorsqu'ils sont actionnés, font en sorte que ledit dispositif de circuit (12) applique une force de freinage prédéterminée auxdits dispositifs de freinage des roues motrices ($B_{RL}$, $B_{RR}$) avant ou au début d'une opération de démarrage du véhicule ; et des dispositifs (8, 6, 4, 5) pour provoquer une réduction progressive de la force de freinage appliquée aux dispositifs de freinage des roues motrices ($B_{RL}$, $B_{RR}$) pendant l'opération de démarrage et avant détection du patinage d'une roue motrice ($W_{RL}$, $W_{RR}$).

6. Appareil selon la revendication 5, comprenant des dispositifs (1, 2, 3, 4) pour détecter l'existence d'un patinage d'une roue motrice lors du déplacement de la voiture, un dispositif (5) pour émettre un signal de sortie à un niveau en rapport avec le patinage détecté, un dispositif (12) pour fournir une force de freinage des roues motrices, en fonction dudit signal de sortie, audit dispositif de freinage des roues motrices ($B_{RL}$) afin de s'opposer au patinage, et un dispositif (6) pour bloquer le fonctionnement dudit dispositif déterminant le patinage et du dispositif correspondant émettant le signal de sortie pendant le démarrage à partir de la condition d'arrêt.

7. Appareil selon la revendication 6, comprenant des dispositifs (9, 10) pour empêcher le fonctionnement dudit dispositif de blocage et du moyen d'application de la force de freinage prédéterminée, à des vitesses supérieures à une vitesse prédéterminée, pour permettre le contrôle du dispositif déterminant le patinage (1, 2, 3, 4)), du dispositif générateur de signaux de sortie (5) correspondant, et du dispositif (12) fournissant la force de freinage correspondante.

FIG 1

FIG 3

FIG 2

## FIG 4

(a) SWITCH 7

(b) SWITCH 8

(c) FLIP FLOP 6

(d) JUDGED VALUE TS

$P_{BO}$

(e) BRAKING PB PRESURE

(f) DRIVE WHEEL SPEED V